# EUROPÄISCHE PATENTANMELDUNG

(11) **EP 0 553 669 A1**
(43) Veröffentlichungstag der Anmeldung: **04.08.1993**
(21) Anmeldenummer: 93100618.3
(22) Anmeldetag: 16.01.1993
(51) Int. Cl.: H01B 13/32, G02B 6/44

(54) **Verfahren zur Herstellung eines Nachrichtenkabels**

(30) Priorität: 31.01.1992 DE 4202716
(71) Anmelder: kabelmetal electro GmbH, D-30002 Hannover (DE)
(72) Erfinder: Scholz, Siegfried, Dipl.-Ing., W-3012 Langenhagen 5 (DE)

(57) **Zusammenfassung**

Es wird ein Verfahren zur Herstellung eines Nachrichtenkabels mit die Kabelseele bildenden kunststoffisolierten Adern und/oder Lichtwellenleitern sowie einem Kabelmantel beschrieben, wobei die Hohlräume in der Kabelseele durch eine die Ausbreitung von Wasser verhindernde Füllmasse, wie z.B. Petrolat, über die gesamte Länge des Kabels gefüllt sind und auf die Kabelseele eine Sperrschicht aus einem für die Füllmasse undurchlässigem Material aufgebracht, auf diese Sperrschicht zumindest ein Prüfleiter wendelartig aufgewickelt und anschließend der Kabelmantel aufgebracht wird. Auf die die Kabelseele vollständig einhüllende Sperrschicht wird diskontinuierlich in bestimmten Abständen eine Füllmasse aufgebracht, wobei die Füllmasse die gesamte Umfangsfläche bedeckt und in einer solchen Menge aufgebracht wird, daß der Spalt zwischen der Sperrschicht und dem Kabelmantel in bestimmten Abständen gegen Wasser abgedichtet ist.

## Beschreibung

Die Erfindung betrifft ein Verfahren zur Herstellung eines Nachrichtenkabels mit die Kabelseele bildenden kunststoffisolierten Adern und/oder Lichtwellenleitern sowie einem Kabelmantel, wobei die Hohlräume in der Kabelseele durch eine die Ausbreitung von Wasser verhindernde Füllmasse wie z.B. Petrolat über die gesamte Länge des Kabels gefüllt sind, bei welchem auf die Kabelseele eine Sperrschicht aus einem für die Füllmasse undurchlässigem Material aufgebracht, auf diese Sperrschicht zumindest ein Prüfleiter wendelartig aufgewickelt und anschließend der Außenmantel aufgebracht wird.

Aus der DE-OS 39 31 666 ist ein kontinuierlich gefülltes Nachrichtenkabel bekannt, bei welchem auf der gefüllten Kabelseele ein Kunststoffband aufliegt und auf das Band ein Prüfleiter aufgewikkelt ist. Das Band ist derart diskontinuierlich aufgebracht, daß periodisch eine Länge mit vollständiger und eine Länge mit unvollständiger oder fehlender Bedeckung aufeinander folgen. Beispielsweise ist das Band in Abständen stark durchlöchert bzw. mit Schlitzen versehen. An den Stellen, wo eine 100%ige Überdeckung vorliegt, entsteht ein Ringspalt zwischen dem Kunststoffband und dem Kabelmantel, in welchem der Prüfleiter frei von Füllmasse verläuft. An den Stellen, wo das Band durchlässig ist, dringt Füllmasse in den Ringspalt und dichtet diesen ab. Der Prüfleiter ist in Füllmasse eingebettet. Bei diesem Kabel kann ein Feuchtigkeitseinbruch gemeldet und geortet werden.

Nachteilig bei diesem Kabel ist, daß nicht genügend Füllmasse von innen nach außen durch die Schlitze dringen kann und dadurch keine absolute Dichtigkeit erreicht werden kann. Ein weiterer Nachteil besteht darin, daß die Füllmasse für die Stopfung der Kabelseele bei relativ niedrigen Temperaturen von größenordnungsmäßig unter 90 _{°} C sehr dünnflüssig sein muß, damit sie auch in die innen liegenden Zwickel der Kabelseele eindringen kann. Bei einer Temperaturerhöhung des Kabels auf Temperaturen die in der Nähe des Erweichungspunktes der Füllmasse liegen, kann diese verlaufen, wodurch die Wirkung der Sperrstopfen nicht mehr gegeben ist. Darüberhinaus ist die Spannungsfestigkeit der Kabelseele zu den Prüfleitern im Bereich der Sperrstopfen vermindert.

Der vorliegenden Erfindung liegt die Aufgabe zugrunde, die geschilderten Nachteile zu vermeiden. Insbesondere soll ein Verfahren bereitgestellt werden, bei welchem in der Kabelfertigung an sich übliche Fertigungsverfahren zur Lösung der geschilderten Aufgabe eingesetzt werden.

Diese Aufgabe wird dadurch gelöst, daß auf die die Kabelseele vollständig einhüllende Sperrschicht diskontinuierlich in bestimmten Abständen eine Füllmasse aufgebracht wird, daß die Füllmasse die gesamte Umfangsfläche bedeckt und daß die Füllmasse in einer solchen Menge aufgebracht wird, daß der Spalt zwischen der Sperrschicht und dem Kabelmantel in bestimmten Abständen gegen Wasser abgedichtet ist.

Bei dem nach der Lehre der Erfindung hergestellten Kabel wechseln sich in Längsrichtung des Kabels gesehen Abschnitte, bei denen ein Ringspalt zwischen der Sperrschicht und dem Kabelmantel verbleibt, mit solchen ab, bei denen der Ringspalt vollkommen abgedichtet ist. Eingedrungenes Wasser kann sich nur zwischen den Stopfstellen in dem dünnen Spalt ausbreiten und kann dort sehr schnell festgestellt und geortet werden.

Mit besonderem Vorteil wird die Sperrschicht auf die Kabelseele extrudiert. Diese Technik ist beim Stand der Technik nach der DE-OS 39 31 666 nicht möglich.

Nach einer Alternative wird als Sperrschicht um die Kabelseele ein längseinlaufendes Kunststoffband herumgeformt.

Bei Kabelseelen mit einem Durchmesser von mehr als 70 mm wird das Kunststoffband zweckmäßigerweise durch Wickeln aufgebracht.

Bei dem Prüfleiter handelt es sich üblicherweise um ein Prüfleiterpaar, dessen Isolierung bei Anwesenheit von Feuchtigkeit seine Isoliereigenschaft verliert. Es besteht jedoch auch die Möglichkeit nur einen Prüfleiter aufzuwickeln und eine metallisierte Kunststoffolie sowohl als Sperrschicht als auch als Leiter zu verwenden. Die metallisierte Fläche weist dann nach außen.

Die Füllmasse wird vorteilhafterweise auf die Sperrschicht aufgespült und überschüssige Füllmasse wird abgestreift. Durch den Abstreifvorgang wird die Füllmasse in einer gleichmäßig dicken Schicht über den gesamten Umfang der Sperrschicht verteilt.

Ein wesentlicher Vorteil der Erfindung ist darin zu sehen, daß für die zwischen Sperrschicht und Kabelmantel angeordnete Füllmasse ein mit teilchenförmigem Füllstoff angereichertes Petrolat verwendet wird. Dabei ist es von Vorteil, wenn die verwendete Füllmasse eine höhere Erweichungstemperatur als die in der Seele befindliche Füllmasse aufweist. Eine erhöhte Standsicherheit der Sperrstopfen bei erhöhter Temperaturen ist dadurch gewährleistet. Als Füllstoff können beispielsweise hohle Kunststoffkügelchen sein.

Die Erfindung ist anhand des in der Figur schematisch dargestellten Ausführungsbeispiels näher erläutert.

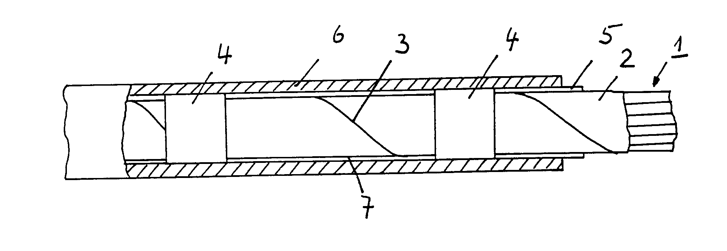

In der Figur 1 ist mit 1 die aus einer Vielzahl von nicht näher bezeichneten kunststoffisolierten Kupferleitern und/oder Lichtwellenleitern bestehende Kabelseele bezeichnet. Die Kupferleiter und/oder Lichtwellenleiter sind miteinander verseilt. Die zwischen den Kupferleitern und/oder Lichtwellenleitern befindlichen Hohlräume sind über die gesamte Kabellänge mit einer wasserabweisenden Füllmasse, vorzugsweise auf Petrolatbasis, gefüllt, so daß die Kabelseele weitestgehend längswasserdicht ist. Die Füllmasse wird unter hohem Druck und bei höherpaarigen Kabelseelen mit einer erhöhten Temperatur in die Kabelseele 1 von außen eingepreßt.

Über dieses Kreppapierband wird eine Sperrschicht 2 aufgebracht, die eine extrudierte Kunststoffschicht von ca. 0,5 - 1,0 mm Wanddicke, ein längseinlaufendes Kunststoffband oder bei größeren Kabelseelendurchmessern ein gewickeltes Kunststoffband sein kann. Wesentlich ist, daß die Sperrschicht 2 für die Füllmasse undurchlässig ist. Aus dieser Forderung resultiert auch, daß das Kunststoffband mit überlappenden Bandkanten aufgebracht sein muß.

Auf die Sperrschicht 2 wird ein Prüfleiter 3 wendelartig aufgebacht Der Prüfleiter 3 kann aus einem nicht näher dargestellten Aderpaar bestehen, von denen zumindest eine der Adern eine perforierte Isolierung aus einem Kunststoff aufweist und zwischen denen ein elektrisches Potential aufrechterhalten wird. Andererseits kann der Prüfleiter 3 auch eine Ader mit einer perforierten Kunststoffisolierung sein.

Auf das so vorbereitete Gebilde wird in kontinuierlichem Durchlauf portionsweise eine wasserabweisende Füllmasse 4 aufgebracht. Die Füllmasse 4 wird vorzugsweise aufgespült, d.h. in erwärmtem Zustand von oben auf die Sperrschicht 2 aufgebracht. Durch ein geeignetes nicht dargestelltes Nippelwerkzeug wird überschüssige Füllmasse 4 abgestreift und dabei gleichzeitig die Füllmasse 4 über den Umfang der Sperrschicht 2 gleichmäßig verteilt. Die Wanddicke der Füllmasse 4 ist zumindest im Bereich des Prüfleiters 3 mindestens gleich dem Durchmesser des Prüfleiters 3.

Anschließend wird eine copolymerbeschichtete Aluminiumfolie 5 längseinlaufend mit überlappenden Bandkanten aufgebracht und darüber ein Kunststoffmantel 6 extrudiert. Bei der Extrusion verklebt die Folie 5 mit dem Kunststoffmantel und gleichzeitig verkleben die überlappenden Bandkanten.

Wenn die Folie 5 eine einseitig, d.h. nur außen beschichtete Aluminiumfolie ist, kann diese mit einer Ader mit perforierter Kunststoffisolierung als Prüfleiterpaar benutzt werden. Das Potential liegt dann zwischen der Ader und der Aluminiumschicht der Folie 5.

Die Länge der Füllmassestopfen 4 und der Abstand zwischen den Füllmassestopfen 4 ist beliebig einstellbar. Wesentlich ist nur, daß die Länge so groß ist, daß eingedrungenes Wasser abgeschottet werden kann. Als Abstand sind 2 - 3 m sinnvoll.

Die Füllmasse für die Füllmassesperrstopfen 4 kann ein Petrolat sein, dem hohle Kunststoffkügelchen als Füllstoff zugegeben werden. Solche Füllmassen weisen hervorragende Abdichtungseigenschaften auf.

Tritt bei einem solchen Kabel z.B. infolge einer Beschädigung des Kunststoffmantel 6 und der Folie 5 Wasser in den Ringspalt 7 zwischen der Folie 5 und der Sperrschicht 2 ein, so kann sich dieses zunächst nur bis zu dem nächsten Füllmassestopfen 4 ausbreiten. Da der elektrische Widerstand zwischen den Adern des Prüfleiters 3 bzw. zwischen Prüfleiter 3 und der Aluminiumschicht sich drastisch verringert, wird der Schaden sofort gemeldet und kann in an sich bekannter Weise auch schnell geortet werden.

## Patentansprüche

1. Verfahren zur Herstellung eines Nachrichtenkabels mit die Kabelseele bildenden kunststoffisolierten Adern und/oder Lichtwellenleitern sowie einem Kabelmantel, wobei die Hohlräume in der Kabelseele durch eine die Ausbreitung von Wasser verhindernde Füllmasse, wie z.B. Petrolat, über die gesamte Länge des Kabels gefüllt sind, bei welchem auf die Kabelseele eine Sperrschicht aus einem für die Füllmasse undurchlässigem Material aufgebracht, auf diese Sperrschicht zumindest ein Prüfleiter wendelartig aufgewickelt und anschließend der Kabelmantel aufgebracht wird, dadurch gekennzeichnet, daß auf die die Kabelseele vollständig einhüllende Sperrschicht diskontinuierlich in bestimmten Abständen eine Füllmasse aufgebracht wird, daß die Füllmasse die gesamte Umfangsfläche bedeckt und daß die Füllmasse in einer solchen Menge aufgebracht wird, daß der Spalt zwischen der Sperrschicht und dem Kabelmantel in bestimmten Abständen gegen Wasser abgedichtet ist.

2. Verfahren nach Anspruch 1, dadurch gekennzeichnet, daß die Sperrschicht auf die Kabelseele extrudiert wird.

3. Verfahren nach Anspruch 1, dadurch gekennzeichnet, daß als Sperrschicht um die Kabelseele ein längseinlaufendes Kunststoffband herumgeformt wird.

4. Verfahren nach einem der Ansprüche 1 bis 3, dadurch gekennzeichnet, daß die Füllmasse auf die Sperrschicht aufgespült und überschüssige Füllmasse abgestreift wird.

5. Verfahren nach einem der Ansprüche 1 bis 4, dadurch gekennzeichnet, daß für die zwischen der Sperrschicht und dem Kabelmantel angeordnete Füllmasse ein mit teilchenförmigen Füllstoffen angereichertes Petrolat verwendet wird.
